# EUROPÄISCHE PATENTANMELDUNG

(11) **EP 0 660 055 A2**
(43) Veröffentlichungstag der Anmeldung: **28.06.1995**
(21) Anmeldenummer: 94119804.6
(22) Anmeldetag: 15.12.1994
(51) Int. Cl.: F25B 29/00, B60H 1/00

(54) **Heizungs- und Kühlanlage**

(30) Priorität: 24.12.1993 DE 9319874 U
(71) Anmelder: HAGENUK FAHRZEUGKLIMA GmbH, D-04435 Schkeuditz (DE)
(72) Erfinder: Gaik, Gerd, D-24119 Kronshagen (DE); Schwartz, Eckhard, D-24631 Langwedel (DE)
(74) Vertreter: Köckeritz, Günter

(57) **Zusammenfassung**

Die Erfindung betrifft eine Heizungs- und Kühlanlage mit einer integrierten Vollhermetik-Kältemaschine (1) insbesondere zur Kühlung und Beheizung von Fahrzeugen aller Art. Klimaanlagen für Fahrzeuge aller Art sind weitgehend bekannt. Die Aufgabe der Erfindung besteht darin, eine Heizungs- und Kühlanlage für Fahrzeuge aller Art zu schaffen, bei der die Gefahr einer Kältemittelemission nahezu Null ist. Die erfindungsgemäße Heizungs- und Kühlanlage setzt sich aus einer Vollhermetik-Kältemaschine (1), einer Wärmetauschereinheit (2) und einem Luftbehandlungssystem bzw. einem Konvektionsheizungssystem (3,4) zusammen, wobei die Kältemaschine aus einem Druckbehälter (1a) besteht, in welchem die Kältetechnikbauteile vollhermetisch installiert sind. In der Vollhermetik-Kältemaschine können alle herkömmlichen Komponenten der Kältetechnik verwendet werden.

## Beschreibung

Die Erfindung betrifft eine Heizungs- und Kühlanlage mit einer integrierten Vollhermetik-Kältemaschine insbesondere zur Kühlung und Beheizung von Fahrzeugen aller Art.
Klimaanlagen für Fahrzeuge aller Art sind weitgehend bekannt.
Anlagen, die Kältemaschinen enthalten, bei denen eine Kältemittelemission nahezu ausgeschlossen ist, sind jedoch aus dem Stand der Technik nicht bekannt.

Die Aufgabe der Erfindung besteht darin, eine Heizungs- und Kühlanlage für Fahrzeuge aller Art zu schaffen, bei der die Gefahr einer Kältemittelemission nahezu Null ist.

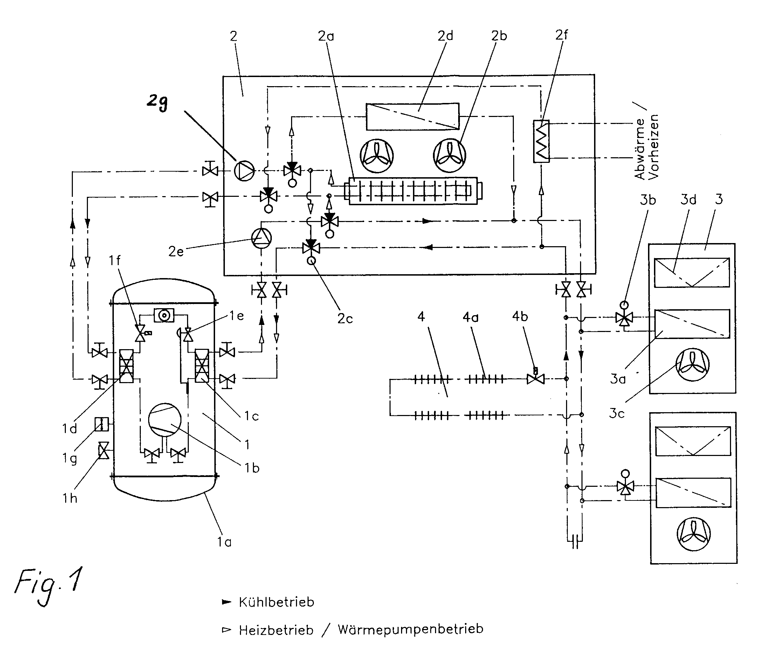

Erfindungsgemäß wird die Aufgabe durch die Merkmale des Anspruchs 1 gelöst. Vorteilhafte Weiterbildungen der Anlage sind in den Unteransprüchen enthalten.
Die erfindungsgemäße Heizungs- und Kühlanlage setzt sich aus einer Vollhermetik-Kältemaschine, einer Wärmetauschereinheit und einem Luftbehandlungssystem bzw. einem Konvektionsheizungssystem zusammen, wobei die Kältemaschine aus einem Druckbehälter besteht, in welchem die Kältetechnikbauteile vollhermetisch installiert sind. In der Vollhermetik-Kältemaschine können alle herkömmlichen Komponenten der Kältetechnik verwendet werden.
Die Besonderheit dieser Maschine besteht darin, daß alle Bauteile der Kältetechnik in einem druckdichten Behälter installiert sind. Dieser Behälter hat folgende Funktionen:
- Verhinderung der Kältemittelemission bei Anlagenstörungen
- tragendes Gestell
- Schutz vor Beschädigung, z. B. bei einem Unfall
- Schutz vor unbefugtem Eingriff in den Kältekreis
   kurze Austauschzeiten
In der Figur 1 ist die erfindungsgemäße Heizungs- und Kühlanlage mit Druckbehälter schematisch dargestellt. Darin bedeuten die Bezugszeichen:
- 1: Vollhermetische Kältemaschine
- 1a: Druckbehälter
- 1b: Verdichter
- 1c: Verdampfer Kältemittel/Sole
- 1d: Verflüssiger Kältemittel/Sole
- 1e: Expansionsventil
- 1f: Magnetventil
- 1g: Druckmessgerät
- 1h: Evakuieranschluß
- 2: Wärmetauschereinheit
- 2a: Wärmetauscher Luft/Sole
- 2b: Lüfter
- 2c: Umschaltventil
- 2d: Wärmeerzeuger elek. o. ölgefeuert
- 2e: Pumpe
- 2f: Wärmetauscher Abwärme Wagen
und Vorheizen Wagen
- 2g: Umschaltventil
- 3: Lufbehandler
- 3a: Wärmetauscher Luft/Sole
- 3b: Regelventil
- 3c: Lüfter
- 3d: Filter
- 4: Konvektionsheizung
- 4a: Heizkörper
- 4b: Regelventil
Der Aufbau dieses Behälters 1a kann folgendermaßen gestaltet werden:
Es wird ein zylindrisches Rohr mit jeweils einem Flansch am Ende verwendet. Beiderseits werden Klöpperböden druckdicht angeflanscht. Dieser Aufbau gewährleistet eine gute Zugänglichkeit aller Komponenten bei Erstmontage sowie bei eventuell erforderlichen Reparaturen. Alle Anschlüsse werden ebenfalls druckdicht gestaltet. Die Gerätebefestigungen sind durch Schweißen direkt an der Behälteraußenseite angebracht. Der Behälter wird mit einem, dem verwendeten Kältemittel angepaßten Prüfdruck geprüft. Um die (innerhalb des Behälters) erzeugte Leistung ohne Gefahr für die Umwelt nutzen zu können, werden die "Prozeßwärme" und die "Prozeßkälte" über kompakte Wärmetauscher vom Kältemittel auf einen ökologisch unbedenklichen Energieträger, z. B. Sole (Wasser-Glycol-Gemisch) übertragen. Dieser Energieträger wird dann über Leitungen aus dem Druckbehälter geführt. Dadurch ist gewährleistet. daß kein Kältemittel oder kältemittelführende Teile mit der Außenatmosphäre in Verbindung kommen können. Anschließend kann eine Nutzung beider Energieströme über eine entsprechend nachgeschaltete Anlagen erfolgen. Hierzu stehen an der Außenseite vier absperrbare Anschlüsse (zwei Vor- und zwei Rückläufe) zur Verfügung. Außerdem befinden sich an der Außenseite ein Druckmeßgerät 1g und ein Evakuieranschluß 1h. Das Druckmeßgerät 1g dient zur Diagnose des Kältekreises. Steht ein Überdruck in dem Behälter 1a an, ist dies ein sicheres Zeichen für eine Störung innerhalb des Kältekreises. Der Evakuieranschluß 1h dient zum Abpumpen der inneren Atmosphäre des Behälters 1a. Dies geschieht grundsätzlich vor jedem Öffnen der Vollhermetik-Kältemaschine 1. Somit kann gewährleistet werden, daß jede noch so geringe, aus dem Kältekreis austretende Kältemittelmenge an einem Eintritt in dei Außenatmosphäre gehindert und einer sicheren Wiederverwendung zugeführt wird.

Durch die vollständige Hermetisierung des Kälteprozesses ist es möglich, anschlußfertige und bereits leistungsgeprüfte Geräte an den Betreiber zu liefern. Dieser muß lediglich die elektrischen und die wasserseitigen Verbindungen zum Gerät herstellen. Dadurch kann Fachpersonal bzw. eine Fachabteilung Kältetechnik beim Betreiber eingespart werden (kein Umgang mit Kältemittel). Dabei wäre es denkbar, daß ein Öffnen des Gerätes nur durch den Hersteller zulässig ist, und der Betreiber ausschließlich mit Austauschgeräten arbeitet. In diesem Falle ist ein sachgemäßer Umgang mit dem Kältemittel, und damit ein funktionierendes Recycling, sichergestellt.

Die Vorteile der Vollhermetik-Kältemaschine bestehen zusammenfassend darin ,daß
- die Gefahr der Kältemittelemission nahezu Null geht;
- ökologisch bedenkliche Kältemittel (FCKW, FKW) oder sicherheitstechnisch bedenkliche Kältemittel (Butan, Ammoniak, z. T. ökologisch unbedenklich) eingesetzt werden können;
- ein Wärmepumpenbetrieb ohne Umkehr des Kälteprozesses möglich ist;
- die Einbindung und Nutzung von Abwärme mit geringem Aufwand erfolgt; die in der Installation aufwendigen Heizluftkanäle können entfallen und durch Konvektionsheizkörper ersetzt werden;
- eine gute Regelbarkeit der Anlage durch Verwendung von Sole als Zwischenenergieträger möglich ist;
- der Betreiber die Anlage einfach handhaben kann und eine Berührung nicht mit dem Kälteprozeß und Kältemittel, sondern nur mit der Wassertechnik notwendig ist;
   mehrere Räume können auf einfache Weise getrennt voneinander geregelt werden.

Die Vollhermetik-Kältemaschine 1 kann mit einer Wärmetauschereinheit 2 und einem Luftbehandlungs- bzw. einem Heizungssystem 3,4 zu einer effizienten Heizungs- und Kühlanlage verquickt werden. Als Energieträger könnte Sole verwendet werden. Die Verbindung der Bauteile untereinander kann z. B. mit Schnellkupplern und Schläuchen realisiert werden. Hierbei entfällt dann eine aufwendige Rohrverlegung. Außerdem sind alle Einheiten schnell tauschbar.
Alle für die Kälteerzeugung notwendigen Bauteile befinden sich innerhalb der Vollhermetik-Kältemaschine 1. Der mit dem Kältemittelverflüssiger 1d in Verbindung stehende Solekreis wird an die Wärmetauschereinheit 2 angeschlossen. Innerhalb dieser Einheit befinden sich für diesen Kreis separat eine Umwälzpumpe 2g, Mischventile und ein Luft-Sole-Wärmetauscher 2a. Im normalen Kühlbetrieb wird hier die im Kälteprozeß anfallende Abwärme an die Außenluft abgeführt.
Im Heizbetrieb (Wärmepumpenbetrieb) wird der Solekreis mittels Umschaltventilen 2g vom Wärmetauscher getrennt und mit dem Luftbehandlungs- bzw. Heizungssystem 3,4 des Fahrzeugs verbunden. Hier kann die Wärmeenergie zur Wagenheizung genutzt werden. Zur Abdeckung von tiefen Außentemperaturen besteht dei Möglichkeit, einen zusätzlichen Wärmeerzeuger 2f (elektrisch oder ölgefeuert) und/oder einen Wärmetauscher zur Nutzung von vorhandener Abwärme in den Kreis zu integrieren. Dabei entsteht ein sehr flexibles Klimasystem, welches die unterschiedlichsten Energien zur Beheizung des Fahrzeugs nutzen kann.

Der mit dem Kältemittelverdampfer 1c in Verbindung stehende Solekreis wird ebenfalls an die Wärmetauschereinheit 2 angeschlossen. Auch hier sind für diesen Kreis eine Umwälzpumpe 2e und Umschaltventile 2c installiert.
Im Kühlbetrieb ist dieser Solekreis über die Wärmetauschereinheit 2 mit dem Luftbehandlungssystem 3 des Fahrzeugs verbunden und kann hier zur Kühlung genutzt werden.
Im Heizbetrieb wird der Solekreis mittels Ventilen umgeschaltet und mit dem Luft-Sole-Wärmetauscher verbunden. Hier wird dann der Außenluft Verdampfungswärme entnommen. Als vorteilhaft wäre hier zu erwähnen, daß der Heizbetrieb ohne die sonst schwierige, aber erforderliche Umkehrung des Kälteprozesses auskommt. Er wird durch unkompliziertes Umschalten der Solekreise aktiviert.

Mit Hilfe eines Mikrorechnerreglers wird die Steuerung und Regelung der Kältemaschine unter Berücksichtigung der notwendigen Sicherheitsvorkehrungen in das Gesamtkonzept der Klimaanlage eingebunden. Dabei werden die fahrzeugspezifischen Einrichtungen, wie Wärmetauscher, zur Abwärmeausnutzung (z. B. von Fahrmotoren oder Leistungselektronik), elektrische oder ölgefeuerte Wasserheizgeräte, Luftbehandler für die Klimatisierung oder für die Kühlung/Belüftung sowie Konvektionsheizungen sinnvoll integriert.

Die Steuerung der Kältemaschine kann in zwei Leistungsstufen erfolgen, so daß bei intermittierendem Betrieb unter Berücksichtigung der maximal zulässigen Schalthäufigkeit bzw. der Mindestlaufzeiten des Verdichters die zur Klimatisierung notwendige Kühl-/ Heizleistung im Solekreislauf vorgehalten werden kann.
Durch den Einsatz von motorisch angetriebenen Mischventilen in den Luftbehandlungsgeräten kann die den zu klimatisierenden Räumen notwendige Heiz- oder Kühlenergie stufenlos veränderbar zur Verfügung gestellt werden und somit eine optimale Raumtemperaturregelung gewährleistet werden. Der Einsatz einer aufwendigen Energieversorgung (z. B. regelbarer Drehrichter oder Frequenzumrichter) für den Verdichter ist somit nicht notwendig.

## Patentansprüche

1. Heizungs- und Kühlanlage, die sich aus einer Kältemaschine, einer Wärmetauschereinheit und einem Lufzbehandlungssystem bzw. einem Heizungssystem zusammensetzt,
dadurch gekennzeichnet, daß
- die Kältemaschine (1) aus einem Druckbehälter (1 a) besteht, in welchem mindestens die Kältetechnikbauteile Verdichter (1 b), Verdampfer (1 c) und Verflüssiger (1 d) vollhermetisch installiert sind;
- die mit dem Kältemittelverflüssiger (1 d) und dem Kältemittelverdampfer (1 c) in Verbindungen stehenden Solekreise über Umschaltventile (2 c , 2 g) mit der Wärmetauschereinheit (2) und/oder dem Luftbehandlungs- bzw. Konvektionsheizungssystem (3, 4) verbunden sind;

2. Heizungs- und Kühlanlage nach Anspruch 1
dadurch gekennzeichnet, daß
der Druckbehälter (1 a) über druckdichte Anschlüsse mit den nachgeschalteten Anlagenteilen verbunden ist.

3. Heizungs- und Kühlanlage nach den Ansprüchen 1 und 2
dadurch gekennzeichnet, daß
die Verbindung der Bauteile untereinander mit Schnellkupplern und/oder Schläuchen und/oder ähnlichen Verbindungsmitteln erfolgt.
